# EUROPÄISCHE PATENTSCHRIFT

(11) **EP 1 190 880 B1**
(45) Veröffentlichungstag und Bekanntmachung des Hinweises auf die Patenterteilung: **09.11.2005**
(21) Anmeldenummer: 01119193.9
(22) Anmeldetag: 09.08.2001
(51) Int. Cl.: B60J 7/12

(54) **Vorrichtung zur Erfassung einer Winkelstellung**
Devise for detecting an angular position
Dispositif pour detenir la position angulaire

(30) Priorität: 23.09.2000 DE 20016498 U
(43) Veröffentlichungstag der Anmeldung: 27.03.2002
(73) Patentinhaber: Wilhelm Karmann GmbH, 49084 Osnabrück (DE)
(72) Erfinder: Gutendorf Peter, 49088 Osnabrück (DE); Rethschulte Dieter, 49525 Lengerich (DE); Knobloch Guntram, 49082 Osnabrück (DE)
(74) Vertreter: Busse & Busse Patentanwälte

(56) Entgegenhaltungen:
- DE-A- 19 909 035
- US-A- 5 772 274
- PATENT ABSTRACTS OF JAPAN vol. 013, no. 225 (M-830), 25. Mai 1989 (1989-05-25) & JP 01 041419 A (ASMO CO LTD;OTHERS: 01), 13. Februar 1989 (1989-02-13)

## Beschreibung

Die Erfindung betrifft eine Vorrichtung zur Erfassung einer Winkelstellung von gegeneinander schwenkbeweglichen Teilen eins Cabriolet-Daches nach dem Oberbegriff des Anspruchs 1.

Ein flexibel ausgebildetes Cabriolet-Dach weist eine Trägerstruktur mit im Seitenbereich des Daches gegeneinander verschwenkbaren Lenkern auf, von denen einer gegenüber der Fahrzeugkarosserie starr sein kann oder die beide gegenüber der Karosserie beweglich sind. Auch bei einem teilweise oder vollständig starre Dachteile umfassenden Dach sind im Seitenbereich mechanische Lenker oder dergleichen Steuerungs- oder Antriebsvermittler angeordnet, mittels deren eine Auf- oder Zubewegung des Daches bewirkbar ist.

Es ist wünschenswert, die Momentanstellung des Daches in seiner Öffnungs- oder Schließbewegung oder auch in einer Endstellung zu erfassen, um anhand dieser Information Eingabedaten für den exakten Ablauf der Steuerung der Dachbewegung zu erhalten. Dadurch kann eine exakte Synchronisation von den Fahrzeugseiten zugeordneten Antrieben erfolgen, durch die Eingangsdaten kann eine Regelung des Bewegungsablaufes an Stelle der reinen Steuerung gesetzt werden. Hierzu ist es aus US 5772274 bekannt, die Winkelstellung von gegeneinander schwenkbaren Teilen eines Daches zu erfassen.

Insbesondere bei Textilverdecken kann es zu Verwindungen zwischen das Verdeck unterstützenden Lenkern kommen, so daß nicht nur reine Schwenkbewegungen dieser Lenker gegeneinander resultieren, sondern auch quer hierzu wirkende Bewegungskomponenten während der Dachöffnung oder -schließung auftreten. Dadurch ist die Anordnung von Winkelmeßinstrumenten, die einenends mit einem und anderenends mit dem gegenüber diesem verschwenkbaren Lenker verbunden sind, erschwert. Es kann zu einem Verkanten der gegeneinander beweglichen Teile und beispielsweise bei einem Drehpotentiometer zu einer Beschädigung der elektrisch leitenden Ringlauffläche kommen. Zudem wird die Genauigkeit der Messung beeinträchtigt.

Der Erfindung liegt das Problem zugrunde, hier eine Verbesserung zu schaffen.

Die Erfindung löst dieses Problem durch eine Vorrichtung mit den Merkmalen des Anspruchs 1. Hinsichtlich weiterer vorteilhafter Ausgestaltungen wird auf die Ansprüche 2 bis 8 verwiesen.

Durch die erfindungsgemäße Beweglichkeit der Verbindung zwischen einem Verdeckteil und dem Gehäuse und/oder dem Betätiger können störende Bewegungskomponenten der schwenkbaren Verdeckteile abgefangen werden, ohne daß die Vorrichtung beeinträchtigt würde.

Wenn ein Drehpotentiometer zur Messung der Winkelstellung Verwendung findet, ist eine billige Erfassungsmöglichkeit geschaffen, die mit Standardserienbauteilen zu realisieren ist.

Sofern besonders vorteilhaft sich sowohl von dem Gehäuse als auch von dem Betätiger ein Auslegerarm in Richtung eines Verdecklenkers erstreckt, kann dieser an seinem auswärts weisenden Ende mit dem Lenker einfach verbunden sein.

Besonders günstig für die Genauigkeit der Messung und die mechanisch sichere Halterung des Erfassungsinstruments ist dabei eine Verbindung beweglich, wohingegen die andere Verbindung (des Gehäuses oder des Betätigers) fest ausgebildet ist.

Zum Ausgleich von Toleranzen ist es insbesondere vorteilhaft, wenn die Verbindung in Längserstreckung des schwenkbaren Teils und quer zur Schwenkebene beweglich ist. Dieses kann beispielsweise über einen Zapfen, der in einer Kulisse führbar ist, einfach realisiert werden.

Weitere Vorteile und Einzelheiten ergeben sich aus einem nachfolgend beschriebenen und in der Zeichnung dargestellten Ausführungsbeispiel des Gegenstandes der Erfindung. In der Zeichnung zeigt:

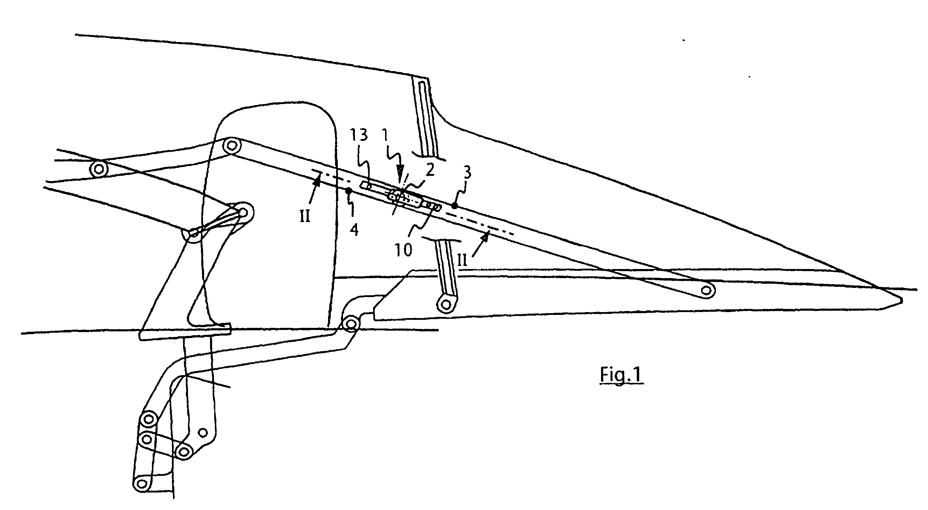

- Fig. 1: eine schematische Darstellung eines Cabriolet-Fahrzeugs mit einer erfindungsgemäßen Vorrichtung bei fluchtender Ausrichtung von gegeneinander schwenkbaren Teilen,

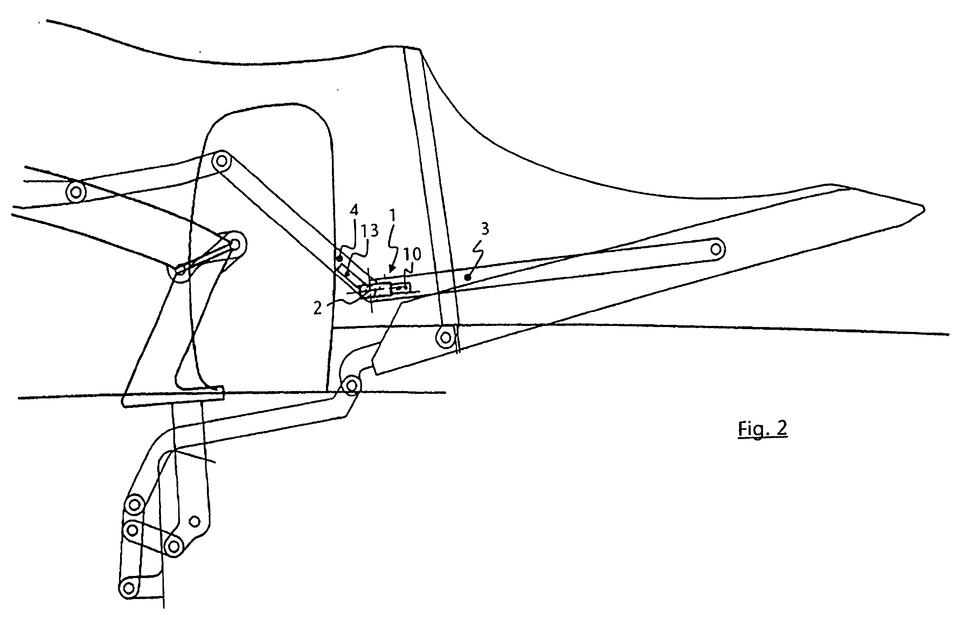

- Fig. 2: eine ähnliche Darstellung wie Fig. 1 bei abgewinkelter Ausrichtung von gegeneinander schwenkbaren Teilen,
- Fig. 3: einen Schnitt entlang der Linie II-II in Fig. 1,
- Fig. 4: eine im mittleren Bereich abgebrochene Draufsicht auf die Vorrichtung nach Fig. 2.

Die in der Zeichnung dargestellte Ausführungsform zeigt eine Vorrichtung 1, die dazu dient, die Winkelstellung zweier um eine Schwenkachse 2 gegeneinander verschwenkbarer und mit einem Verdeck verbundener Teile 3,4 zu erfassen. Hierzu ist ein Drehpotentiometer 5 vorgesehen, das ein Gehäuse 6 und einen darin drehbeweglich geführten Betätiger 7 umfaßt. An Stelle des Drehpotentiometers 5 kommen auch andere elektrische oder elektronische Erfassungsinstrumente in Betracht, beispielsweise eine mit einer Leuchtdiode, einer sich erweiternden Ringkulisse und gegenüberliegenden Fotozellen ausgestattete optische Erfassungseinrichtung. Auch ein rein mechanischer Winkelmesser ist möglich.

Das Gehäuse 6 ist über einen ersten Auslegerarm 8 und der Betätiger 7 über einen zweiten Auslegerarm 9 mit dem als Lenker ausgebildeten Teil 3 bzw. 4 verbunden. Sowohl die Teile 3,4 als auch die Auslegerarme 8,9 können aus einem geeigneten festen Material, beispielsweise Stahl, bestehen. Durch Verschwenkung der Teile 3 und 4 gegeneinander um die Schwenkachse 2 werden daher die Auslegerarme 8,9 mitgenommen, wodurch es zur Relativbewegung zwischen dem Betätiger 7 und dem Gehäuse 6 des Drehpotentiometers 5 - und damit zu einer Änderung eines elektrischen Signals, das ein Maß für den Winkel zwischen den Teilen 3,4 gibt - kommt. Der Auslegerarm 8 des Gehäuses 6 ist über eine Schraubverbindung 10 sowie einen als Drehsicherung dienenden Noppen 11 mit dem verdeckseitigen Lenker 3 fest verbunden. Hingegen ist der Auslegerarm 9 des Betätigers 7 beweglich mit dem zweiten Lenker 4 verbunden.

An Stelle dieser Zuordnung kann auch umgekehrt der Betätiger 7 fest und das Gehäuse 6 beweglich mit den Lenkern 4,3 verbunden sein, es können unter besonderen Bedingungen auch sowohl der Betätiger 7 als auch das Gehäuse 6 beweglich mit dem jeweiligen Lenker 4,3 verbunden sein, wobei in letzterem Fall zumindest die Gefahr besteht, daß die Meßgenauigkeit vermindert wird, der allerdings durch entsprechende konstruktive Ausgestaltung entgegengewirkt werden kann.

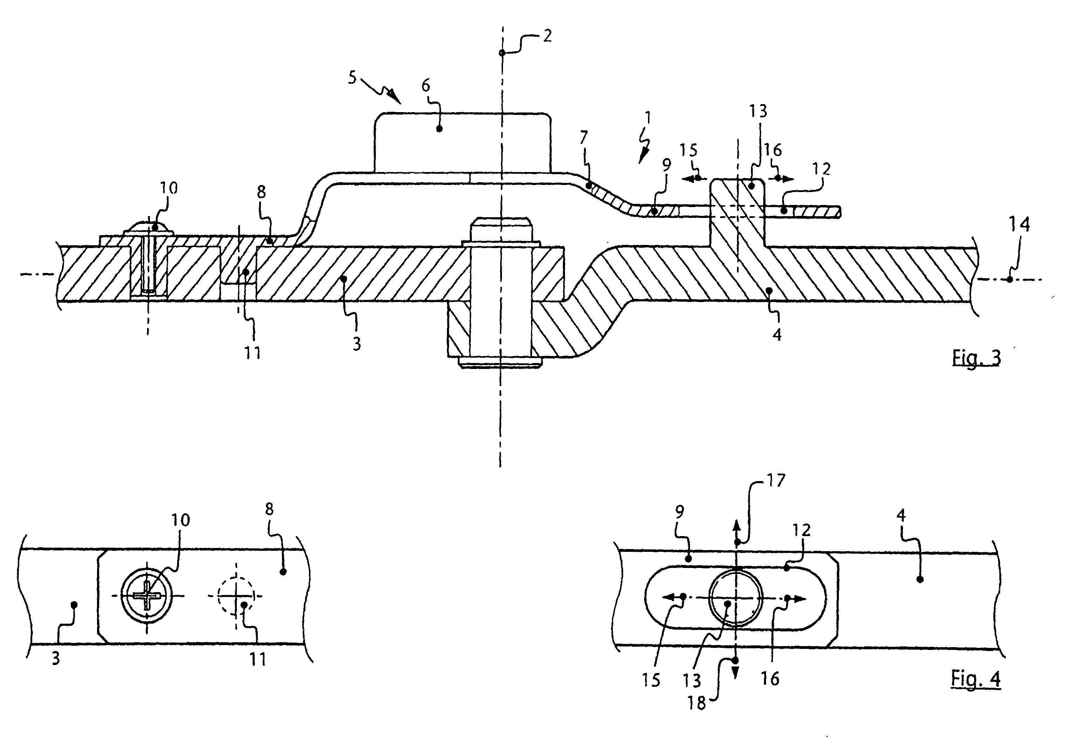

Wie in Fig. 4 sichtbar ist, sind die Auslegerarme 8,9 längserstreckt und parallel zum jeweiligen Lenker 3,4 liegend ausgebildet. Im Ausführungsbeispiel umfaßt der Auslegerarm 9 eine in Längsrichtung des Lenkers 4 erstreckte Kulissenführung 12, in die ein am Lenker 4 angeordneter Zapfen 13 eingreift. Die Verbindung zwischen dem Lenker 4 und dem Auslegerarm 9 ist daher in Richtung der Längserstreckung des Lenkers 4 (in Richtung der Pfeile 15,16) beweglich. Zudem ist sie quer zur Schwenkebene 14, also in Richtung etwa parallel zur Schwenkachse 2, beweglich.

Auch eine Querbeweglichkeit des Auslegerarms 9 (in Richtung der Pfeile 17,18) ist bei einem Übermaß der Kulisse 12 quer zur Erstreckung des Lenkers 4 möglich. Diese Beweglichkeit darf jedoch nur gering gehalten werden, um die Winkelmeßergebnisse nicht zu verfälschen.

Der Zapfen 13 umfaßt im Ausführungsbeispiel keine Abzugssicherung, so daß auch eine größere Verwindung der Teile 3 und 4 gegeneinander nicht zu einer den Betätiger 7 vekantenden Kraft führt. Der Auslegerarm 9 kann von dem Zapfen 13 abgehoben werden.

Das verwendete Drehpotentiometer 5 ist ein Standarddrehpotentiometer, das ohne Veränderungen verwendet werden kann und daher für niedrige Herstellungskosten der Vorrichtung 1 sorgt.

An Stelle einer Befestigung an Lenkern 3,4 eines flexiblen Verdecks kommt auch die Befestigung an flächigen oder voluminös ausgedehnten Bauteilen, die gegeneinander verschwenken, in Betracht.

Das Drehpotentiometer 5 ist insgesamt mit einer Steuerung für Bewegungsabläufe des Daches verbunden und liefert hierfür elektrische Eingangssignale.

## Patentansprüche

1. Vorrichtung (1) zur Erfassung einer Winkelstellung von gegeneinander schwenkbeweglichen Teilen eines Cabriolet-Daches, wobei die Vorrichtung (1) ein elektrisches oder elektronisches Erfassungsinstrument (5) mit einem Gehäuse (6), das mit dem ersten Verdeckteil (3) verbunden ist, und einem gegenüber diesem drehbeweglich geführten Betätiger (7), der mit dem gegenüber dem ersten schwenkbaren zweiten Verdeckteil (4) verbunden ist, **dadurch gekennzeichnet, daß** die Verbindung (10;11) des Gehäuses (6) mit dem ersten (3) und/oder die Verbindung (12;13) des Betätigers (7) mit dem zweiten Teil (4) des Verdecks als bewegliche Verbindung ausgebildet ist.

2. Vorrichtung nach Anspruch 1, **dadurch gekennzeichnet, daß** das Erfassungsinstrument (5) ein Drehpotentiometer ist.

3. Vorrichtung nach einem der Ansprüche 1 oder 2, **dadurch gekennzeichnet, daß** zur Verbindung des Gehäuses (6) wie auch zur Verbindung des Betätigers (7) mit dem jeweiligen Verdeckteil (3;4) ein sich zu diesem parallel erstreckender Auslegerarm (8;9) dient.

4. Vorrichtung nach einem der Ansprüche 1 bis 3, **dadurch gekennzeichnet, daß** die gegeneinander schwenkbaren Teile (3;4) eine von ihrer Verbindungsschwenkachse (2) auswärts weisende Längserstreckung haben und die Verbindung (10,11;12,13) zwischen dem Gehäuse (6) und/oder dem Betätiger (7) in Richtung dieser Längserstreckung beweglich ist.

5. Vorrichtung nach Anspruch 4, **dadurch gekennzeichnet, daß** die Verbindung (12;13) quer zur Schwenkebene beweglich ist.

6. Vorrichtung nach einem der Ansprüche 1 bis 5, **dadurch gekennzeichnet, daß** die bewegliche Verbindung (12;13) durch einen in eine Führungskulisse (12) eingreifenden Zapfen (13) gebildet ist.

7. Vorrichtung nach Anspruch 6, **dadurch gekennzeichnet, daß** der Zapfen (13) frei von einer Abzugssicherung für den daran gehaltenen Betätiger (7) oder das Gehäuse (6) ausgebildet ist.

8. Vorrichtung nach einem der Ansprüche 2 bis 7, **dadurch gekennzeichnet, daß** diese ein als Serienbauteil ausgebildetes Standardpotentiometer (5) umfaßt.

## Claims

1. Device (1) for detecting an angular position of parts of a convertible-vehicle soft roof which are able to move relative to one another by pivoting, the device (1) being an electrical or electronic sensing instrument (5) having a housing (6) which is connected to the first part (3) of the soft top, and having an actuator (7) which is guided to be movable in rotation relative to the first part (3) of the soft top and which is connected to the second part (4) of the soft top, which second part (4) is pivotable relative to the first part, **characterised in that** the connection (10, 11) of the housing (6) to the first part (3) of the soft top and/or the connection (12, 13) of the actuator (7) to the second part (4) of the soft top is in the form of a movable connection.

2. Device according to claim 1, **characterised in that** the sensing instrument (5) is a rotary potentiometer.

3. Device according to either of claims 1 and 2, **characterised in that** what are used to connect the housing (6) and to connect the actuator (7) to the respective parts (3, 4) of the soft top are cantilever arms (8, 9) which extend parallel to the respective parts (3, 4) of the soft top.

4. Device according to one of claims 1 to 3, **characterised in that** the longitudinal extent of the parts (3, 4) which are pivotable relative to one another is in directions which point outwards from the axis (2) on which they are connected to pivot, and the connection (10, 11; 12, 13) between the housing (6) and/or the actuator (7) is movable in the direction of this longitudinal extent.

5. Device according to claim 4, **characterised in that** the connection (12, 13) is movable transversely to the plane of pivot.

6. Device according to one of claims 1 to 5, **characterised in that** the movable connection (12, 13) is formed by a pin (13) which engages in a guiding slot (12),

7. Device according to claim 6, **characterised in that** the pin (13) is arranged to be free of an anti-pulloff means for the actuator (7) held thereon or the housing (6).

8. Device according to one of claims 2 to 7, **characterised in that** it comprises a standard potentiometer (5) in the form of a mass-produced component.

## Revendications

1. Dispositif (1) pour détecter une position angulaire de parties pivotantes les unes par rapport aux autres d'un toit de voiture décapotable, le dispositif (1) comprenant un instrument de détection (5) électrique ou électronique doté d'un boîtier (6) relié à la première partie de capote (3) et un actionneur (7) guidé de façon rotative par rapport à celui-ci, relié à la deuxième partie de capote (4) pivotante par rapport à la première,
**caractérisé en ce que**
la liaison (10 ; 11) entre le boîtier (6) et la première partie (3) et/ou la liaison (12 ; 13) entre l'actionneur (7) et la deuxième partie (4) de la capote est configurée sous forme de liaison mobile.

2. Dispositif selon la revendication 1,
**caractérisé en ce que**
l'instrument de détection (5) est un potentiomètre rotatif.

3. Dispositif selon l'une des revendications 1 ou 2,
**caractérisé en ce que**
pour la liaison du boîtier (6) et de l'actionneur (7) avec la partie de capote respective (3 ; 4), on utilise un bras (8, 9) s'étendant parallèlement à celle-ci.

4. Dispositif selon l'une des revendications 1 à 3,
**caractérisé en ce que**
les parties (3 ; 4) pivotantes les unes par rapport aux autres possèdent une extension longitudinale orientée en s'éloignant de leur axe de pivotement de liaison (2) et la liaison (10, 11 ; 12, 13) entre le boîtier (6) et/ou l'actionneur (7) est mobile en direction de cette extension longitudinale.

5. Dispositif selon la revendication 4,
**caractérisé en ce que**
la liaison (12 ; 13) est mobile perpendiculairement au plan de pivotement.

6. Dispositif selon l'une des revendications 1 à 5,
**caractérisé en ce que**
la liaison mobile (12 ; 13) est formée par un tenon (13) s'engrenant dans une coulisse de guidage (12).

7. Dispositif selon la revendication 6,
**caractérisé en ce que**
le tenon (13) est configuré de manière à être libre d'une sécurité anti-retrait pour l'actionneur (7) ou le boîtier (6) maintenu à cet endroit.

8. Dispositif selon l'une des revendications 2 à 7,
**caractérisé en ce que**
celui-ci comprend un potentiomètre standard (5) configuré en tant que composant de série.
